# EUROPEAN PATENT SPECIFICATION

(11) **EP 2 990 315 B1**
(45) Date of publication and mention of the grant of the patent: **02.03.2022**
(21) Application number: 15181447.2
(22) Date of filing: 18.08.2015
(51) Int. Cl.: B62J 9/00, B62J 17/06

(54) **FRONT PORTION STRUCTURE OF VEHICLE BODY COVER FOR MOTORCYCLE**
FRONTPARTIESTRUKTUR EINER FAHRZEUGKAROSSERIEVERKLEIDUNG FÜR EIN MOTORRAD
STRUCTURE DE PARTIE AVANT DE COUVERCLE DE CARROSSERIE DE VÉHICULE POUR MOTOCYCLETTE

(30) Priority: 29.08.2014 JP 2014176098
(43) Date of publication of application: 02.03.2016
(73) Proprietor: HONDA MOTOR CO., LTD., Tokyo, 107-8556 (JP)
(72) Inventor: NAMAI, Masashi, Wako-shi, Saitama 351-0193 (JP); SAKAMOTO, Kazuhiro, Wako-shi, Saitama 351-0193 (JP)
(74) Representative: Piésold, Alexander James

(56) References cited:
- EP-A2- 2 457 813
- JP-A- 2011 255 868
- JP-U- S4 983 742

## Description

The present invention relates to a front portion structure of a vehicle body cover for a motorcycle which includes a leg shield for covering a head pipe from the rear, in front of a leg portion of an occupant seated on a riding seat, and a front side cover provided continuously to the left and right sides of the leg shield and covering the head pipe from left and right, and wherein an opening is provided on the leg shield.

It is already known from Japanese Patent Laid-Open No. 2007-253835 that an accommodation box can be attached to a leg shield or an opening for allowing maintenance therethrough can be provided in a leg shield.

However, if an opening is provided in a leg shield, then it is normally necessary to form the leg shield with a greater thickness, or provide a plurality of ribs on the leg shield in order to prevent a reduction of rigidity. This leads to an increase of weight or a more complicated structure of the leg shield.

The present invention has been made in view of this situation, and it is an object of at least the preferred embodiment of the present invention to provide a front portion structure of a vehicle body cover for a motorcycle wherein, even if an opening is provided in a leg shield, the rigidity can be assured readily without leading to complication of the structure and increase of weight.

According to the invention as defined in claim 1, there is provided a front portion structure of a vehicle body cover for a motorcycle, comprising: a leg shield which covers, from the rear, a head pipe provided at a front end portion of a vehicle body frame in front of legs of an occupant seated on a riding seat; and front side covers provided continuously to opposite left and right sides of the leg shield so as to cover the head pipe from the left and right sides; the leg shield having openings provided therein; wherein an accommodation case is accommodated in one of the openings so as to project forwardly, characterised by each of the front side covers having an extension integrally provided thereon in such a manner as to extend to a rear face of the leg shield and surround at least part of the openings and overlap with the rear face of the leg shield around the openings; wherein a flange portion provided integrally at a rear portion of the accommodation case and extending sidewardly outwards is attached to the leg shield around the one opening while the extension is formed so as to surround the flange portion from an outer side; and wherein a curved portion which curves forwardly when viewed in side elevation is formed at each of portions of the leg shield and the front side covers corresponding to the openings, and lids for openably closing the openings are attached to the leg shield.

With this arrangement, it is not necessary to provide numerous ribs on the leg shield or to increase the thickness of the leg shield, and the rigidity can be assured readily without complicating the structure and without leading to increase of the weight. Further, as the extensions are provided integrally with the front side covers, a joint does not appear on the front side covers and superior design properties can be assured.

Further, as the flange portion at the rear portion of the accommodation case is attached to the leg shield around the opening and is surrounded by the extension from the outer side, the rigidity of the leg shield in the proximity of the opening can be raised further.

The rigidity is further increased by the curved shape, and besides, by closing the openings with the lids, the rigidity in the proximity of the openings can be increased.

Preferably, an upper ridge line, disposed so as to be in a forwardly downwardly inclined state when viewed in side elevation in front of the openings, and a lower ridge line, having a vertical ridge line portion extending vertically when viewed in side elevation and an inclined ridge line portion extending forwardly and upwardly in a bent state from an upper end of the vertical ridge line portion toward the upper ridge line and disposed below the openings, are formed on the front side covers so as to project sidewardly.

With this arrangement of ridge lines, the front portion structure can contribute to enhancement in rigidity of the front side covers.

In a further preferred form, the upper ridge line extends forwardly farther than a location at which the upper ridge line crosses with an extension of the lower ridge line which extends toward the upper ridge line when viewed in side elevation.

Thus, the upper ridge line can be made long in the longitudinal (forward and rearward) direction to further increase the rigidity of the front side covers.

A preferred embodiment of the invention will now be described by way of example only and with reference to the accompanying drawings, in which:
FIG. 1 is a left side view of a motorcycle;
FIG. 2 is a view taken along arrow 2 in FIG. 1;
FIG. 3 is a view of a front side cover and a leg shield as viewed in the same direction as FIG. 2;
FIG. 4 is a view of a leg shield main body of a portion of the leg shield as viewed in the same direction as FIG. 2;
FIG. 5 is a view of a cover member of a portion of the leg shield as viewed in the same direction as FIG. 2;
FIG. 6 is a view taken along arrow 6 in FIG. 4;
FIG. 7 is a perspective view of an accommodation case;
FIG. 8 is a cross-sectional view taken along line 8-8 in FIG. 2;
FIG. 9 is a view of the front side cover as viewed along arrow 9 of FIG. 2;
FIG. 10 is a cross-sectional view taken along line 10-10 in FIG. 1;
FIG. 11 is a view of part of the leg shield and the front cover as viewed in the same direction as FIG. 10;
FIG. 12 is a view taken along line 12-12 in FIG. 1; and
FIG. 13 is a cross-sectional view taken along line 13-13 in FIG. 12.

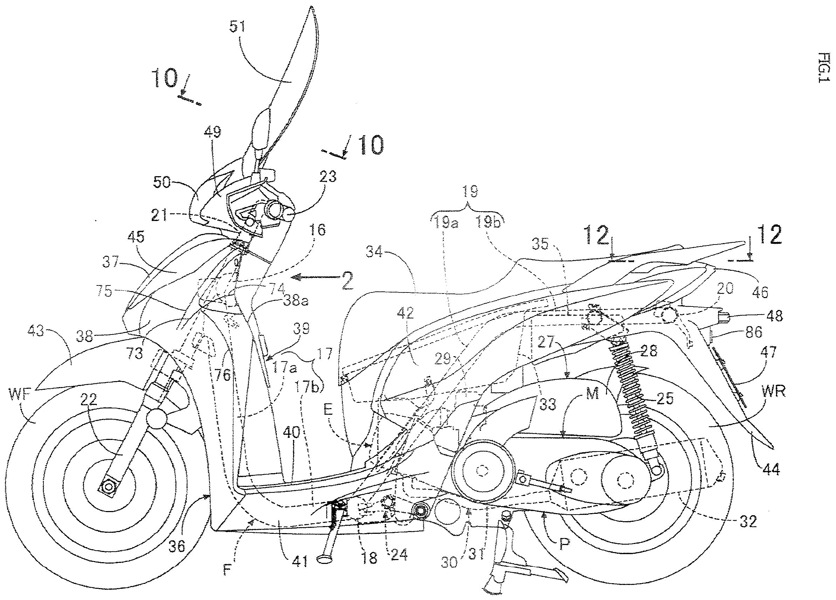

Referring first to FIG. 1, a vehicle body frame F of a scooter-type motorcycle includes a main frame 17, a cross pipe 18, a pair of left and right rear frames 19, and a cross member 20. The main frame 17 has a head pipe 16 fixedly attached to a front end thereof. The cross pipe 18 is fixedly attached to a rear end of the main frame 17 at right angles thereto. The pair of left and right rear frames 19 are provided continuously at their front ends to the lateral end portions of the cross pipe 18. The cross member 20 controls the distance between rear end portions of the rear frames 19.

The main frame 17 is formed by bending and shaping a pipe such that it integrally has a down frame portion 17a and a lower frame portion 17b. The down frame portion 17a is inclined rearwardly and downwardly from the head pipe 16, and the lower frame portion 17b extends rearwardly and substantially horizontally from a rear end of the down frame portion 17a. The cross pipe 18 extends in leftward and rightward directions of the vehicle body frame F, and is fixedly attached at a middle portion thereof in an axial direction to a rear end portion of the main frame 17, that is, to a rear end of the lower frame portion 17b, so as to extend at right angles. Each of the rear frames 19 is formed by bending and shaping a pipe such that it has an inclined frame portion 19a and a horizontal frame portion 19b. The inclined frame portion 19a extends rearwardly and upwardly from the cross pipe 18, and the horizontal frame portion 19b extends substantially horizontally in a rearward direction from an upper end of the inclined frame portion 19a. The left and right horizontal frame portions 19b are connected at a rear end portion thereof to each other by the cross member 20.

A steering shaft 21 is supported for steering movement on the head pipe 16 and extends generally vertically. A front fork 22 is connected to a lower end portion of the steering shaft 21 and supports a front wheel WF at a lower end portion thereof. A steering handlebar 23 is connected to an upper portion of the steering shaft 21.

A power unit P of the unit swing type is supported for upward and downward rocking motion at a front portion of the rear frames 19 of the vehicle body frame F through a link 24, so as to allow upward and downward rocking motion. The power unit P is configured from an engine E disposed forwardly with respect to a rear wheel WR and a transmission system M disposed leftwardly with respect to the rear wheel WR. The rear wheel WR is supported for rotation at a rear portion of the power unit P. A rear cushion unit 25 is provided between an intermediate portion of the horizontal frame portion 19b of the left rear frame 19 and a rear portion of the power unit P.

An intake system 27 of the engine E includes an air cleaner 28 and a throttle body 29 disposed leftwardly with respect to the rear wheel WR. An exhaust system 30 of the engine E includes an exhaust pipe 31 extending on the right side with respect to the rear wheel WR and an exhaust muffler 32 disposed rightwardly of the rear wheel WR.

An accommodation box 33 is supported between front portions of the rear frames 19 of the vehicle body frame F and is disposed above the engine E. A riding seat 34 is supported at an upper portion of the front side of the accommodation box 33 and covers the accommodation box 33 from above such that the accommodation box 33 can be opened and closed. Further, a fuel tank 35 is supported on the rear frames 19 and disposed behind the accommodation box 33.

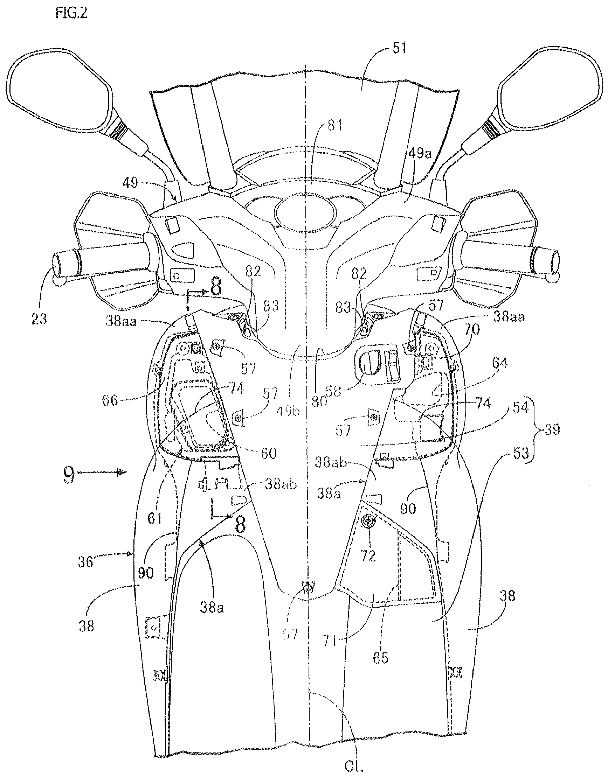

Referring also to FIG. 2, the vehicle body frame F, the engine E, the accommodation box 33, and the fuel tank 35 are covered with a vehicle body cover 36. The vehicle body cover 36 includes a front cover 37, a pair of front side covers 38, a leg shield 39, a step floor 40, a pair of side under cowls 41, and a rear cover 42. The front cover 37 covers the head pipe 16 from the front side. The front side covers 38 are provided continuously to a lower portion of the front cover 37 and cover the head pipe 16 from the opposite left and right sides. The leg shield 39 is provided continuously to the pair of left and right front side covers 38 and covers the head pipe 16 and the down frame portion 17a of the main frame 17 from the rear, in front of the legs of an occupant seated on the riding seat 34. The step floor 40 is provided continuously to a lower portion of the leg shield 39. The side under cowls 41 extend rearwardly from a lower end of the leg shield 39 and are provided continuously to the opposite sides of the step floor 40 in such a manner as to cover the lower frame portion 17b of the main frame 17 from the sides. The rear cover 42 is connected to a rear end of the side under cowls 41 and covers the accommodation box 33 and the fuel tank 35 from the opposite sides. The riding seat 34 is disposed on the rear cover 42.

The front wheel WF is covered from above with a front fender 43. The front fender 43 is supported by the front fork 22. The rear wheel WR is covered from the upper obliquely rear side with a rear fender 44 provided continuously to a rear portion of the rear cover 42 and disposed so as to extend downwardly from a rear portion of the rear cover 42. The rear fender 44 is supported on the rear frames 19.

A winker lamp 45 is provided between each of the opposite left and right sides of the front cover 37 and each of the pair of left and right front side covers 38. A tail lamp 46 is disposed at a rear portion of the rear cover 42, and the rear fender 44 is disposed below the tail lamp 46 and has a license plate 47 attached thereto. A license plate lamp 48 is disposed on the rear fender 44 and illuminates the license plate 47 from above.

An upper portion of the steering shaft 21 and a middle portion of the steering handlebar 23 are covered with a handlebar cover 49, and a head lamp 50 is disposed at a front portion of the handlebar cover 49. A windscreen 51 is attached to the handlebar cover 49 and extends upwardly from the handlebar cover 49.

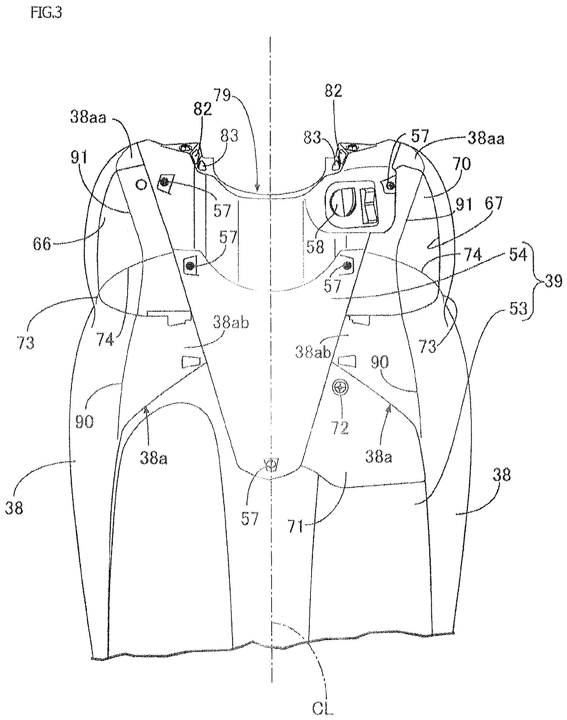

With particular regard to FIGS. 2 and 3, the leg shield 39 is configured from a leg shield main body 53 and a cover member 54. The leg shield main body 53 is provided continuously at the opposite left and right side portions thereof to the pair of left and right front side covers 38. The cover member 54 is fastened to an upper portion at a laterally central location of the leg shield main body 53.

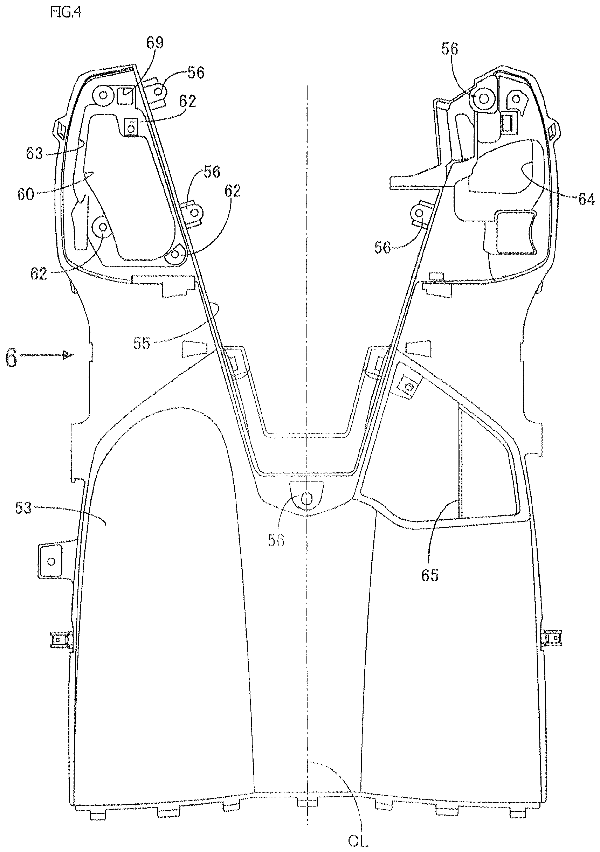

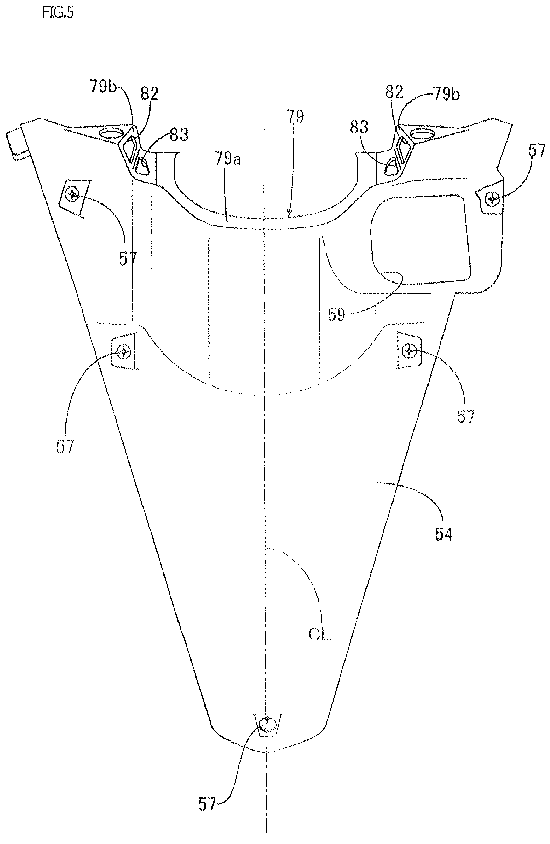

As shown in FIG. 4, a cutout portion 55, which is generally V-shaped and open upwardly, is provided at an upper portion at a laterally central location of the leg shield main body 53. Meanwhile, the cover member 54 has a shape corresponding to the cutout portion 55 as shown in FIG. 5. The cover member 54 is fastened at a plurality of places on a peripheral edge portion of the cutout portion 55 to attaching portions 56 provided on the leg shield main body 53 by screw members 57, and the cutout portion 55 is closed up by the cover member 54. A first opening 59 is provided at a right side portion of an upper portion of the cover member 54 and has a main switch 58 (shown in FIG. 2) disposed therein.

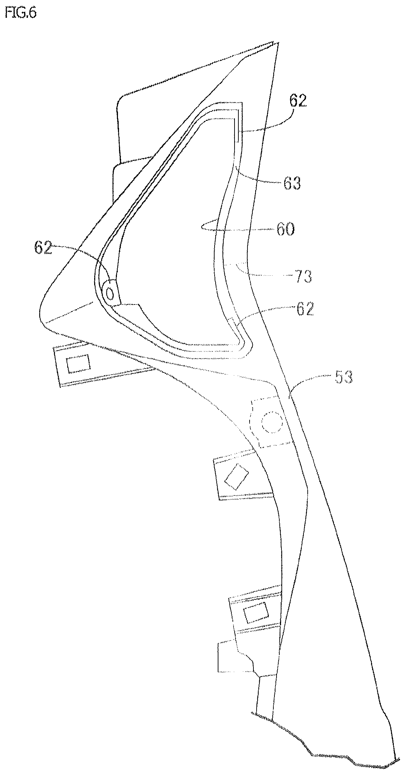

Referring also to FIG. 6, a second opening 60 is provided at an upper portion of a left side portion of the leg shield main body 53. An accommodation case 61 is accommodated in the second opening 60 and projects forwardly. The accommodation case 61 is attached to the leg shield main body 53.

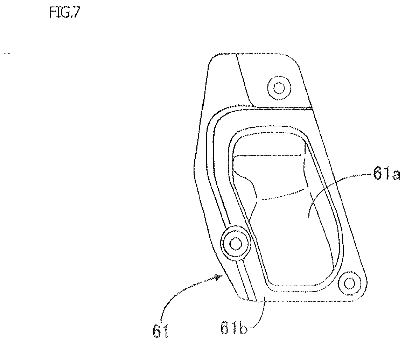

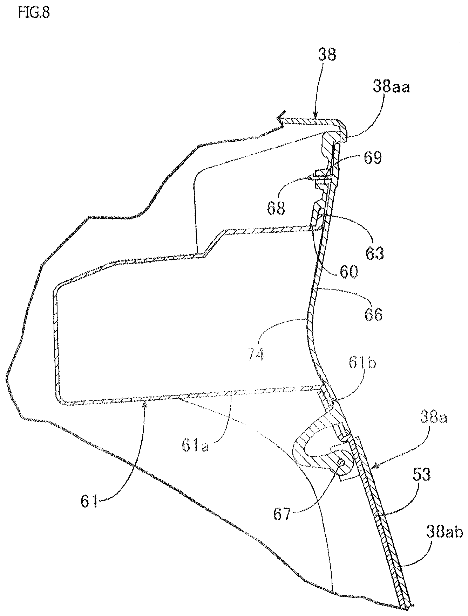

Referring to FIGS. 7 and 8, the accommodation case 61 is formed such that a box-shaped portion 61a, closed at a front end thereof and fitted in the second opening 60, and a flange portion 61b extending outwardly and sidewardly from a rear end of the accommodation case 61 are provided integrally thereon. The accommodation case 61 is attached by means of the flange portion 61b thereof to a plurality of (in this embodiment, three) attaching portions 62 provided on the leg shield main body 53 around the second opening 60 by screw members (not shown). In particular, the flange portion 61b is provided integrally with a rear portion of the accommodation case 61 and extends sidewardly outwards, and the accommodation case 61 is attached by means of the flange portion 61b to the leg shield main body 53 of the leg shield 39 around the second opening 60. Further, a recess portion 63 is formed on the leg shield main body 53 around the second opening 60 and accommodates the flange portion 61b therein.

A third opening 64 for allowing maintenance therethrough is provided at a right side upper portion of the leg shield main body 53 as shown in FIG. 4. A fourth opening 65 for allowing maintenance therethrough is provided at a lower right side portion of the leg shield main body 53.

With regard now to FIG. 8, the second opening 60 can be closed by a first lid 66, which is openable to allow access. The first lid 66 is supported at a lower portion thereof on the leg shield main body 53 below the second opening 60. A locking hole 69 is provided on the leg shield main body 53 above the second opening 60 such that an engaging claw 68 provided at an upper portion of the first lid 66 can be releasably locked.

The third opening 64 can be closed by a second lid 70, which is openable to allow access. The second lid 70 is supported for pivotal motion at a lower portion thereof on the leg shield main body 53 below the third opening 64 by a hinge structure similar to that of the first lid 66. The second lid 70 is releasably locked at an upper portion thereof by the leg shield main body 53 above the third opening 64.

The fourth opening 65 can be closed by a third lid 71. The third lid 71 is fastened to a lower portion of the leg shield main body 53 by a screw member 72.

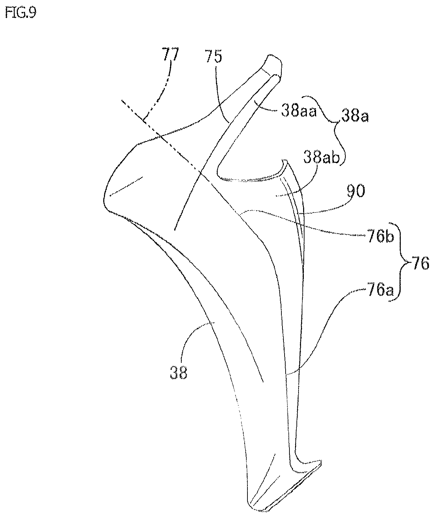

Referring also to FIG. 9, an extension 38a is provided integrally on the front side cover 38 on the left side. The extension 38a extends to a left side rear face of the leg shield main body 53 of the leg shield 39 and surrounds at least part of the second opening 60, and also overlaps with a rear face of the leg shield main body 53 around the second opening 60. In the present embodiment, the extension 38a is formed so as to surround the second opening 60 from the outer side on the opposite side to the cover member 54 and from above and from below such that it cooperates with the cover member 54 to surround the second opening 60 over its circumference. In particular, the extension 38a has an upper extension portion 38aa disposed above the second opening 60 and a lower extension portion 38ab disposed below the second opening 60 and is formed so as to be generally U-shaped and open to the second opening 60 side.

Further, the extension 38a is provided so as to surround the flange portion 61b, which is provided integrally at a rear portion of the accommodation case 61 which projects forwardly from the second opening 60 and extends outwardly sidewards, from the outer side.

Another extension 38a is provided on the front side cover 38 on the right side. The extension 38a extends to a right side rear face of the leg shield main body 53 of the leg shield 39 and cooperates with the cover member 54 to surround the third opening 64 over its overall periphery. Further, the extension 38a overlaps with a rear face of the leg shield main body 53 around the third opening 64.

At each of the portions of the leg shield main body 53 of the leg shield 39 and the front side cover 38 corresponding to the second and third openings 60 and 64, a curved portion 73 is formed such that it is curved forwardly when viewed in side elevation. The first and second lids 66 and 70 have a curved portion 74 corresponding to the curved portion 73 and are attached to the leg shield main body 53 in such a manner as to openably close the second and third openings 60 and 64.

An upper ridge line 75 and a lower ridge line 76 are formed on the front side cover 38 so as to project forwardly. The upper ridge line 75 is disposed so as to be forwardly and downwardly inclined when viewed in side elevation, in front of the second and the third openings 60 and 64. The lower ridge line 76 is disposed below the second and the third openings 60 and 64 and has a vertical ridge line portion 76a and an inclined ridge line portion 76b. The vertical ridge line portion 76a extends vertically when viewed in side elevation, and the inclined ridge line portion 76b extends forwardly and upwardly in a bent state from an upper end of the vertical ridge line portion 76a toward the upper ridge line 75 side.

Further, the upper ridge line 75 extends forwardly farther than a location at which the upper ridge line 75 crosses with an extension 77 of the lower ridge line 76 toward the upper ridge line 75 when viewed in side elevation.

Incidentally, on the front side cover 38, a ridge line 90 is formed such that it extends in the vertical direction so as to form a boundary between a rear face of the leg shield main body 53 and the extension 38a overlapping with the rear face of the leg shield main body 53. Meanwhile, a ridge line 91 is formed on the first and second lids 66 and 70 and connects to the ridge line 90 such that it crosses with the curved portion 74.

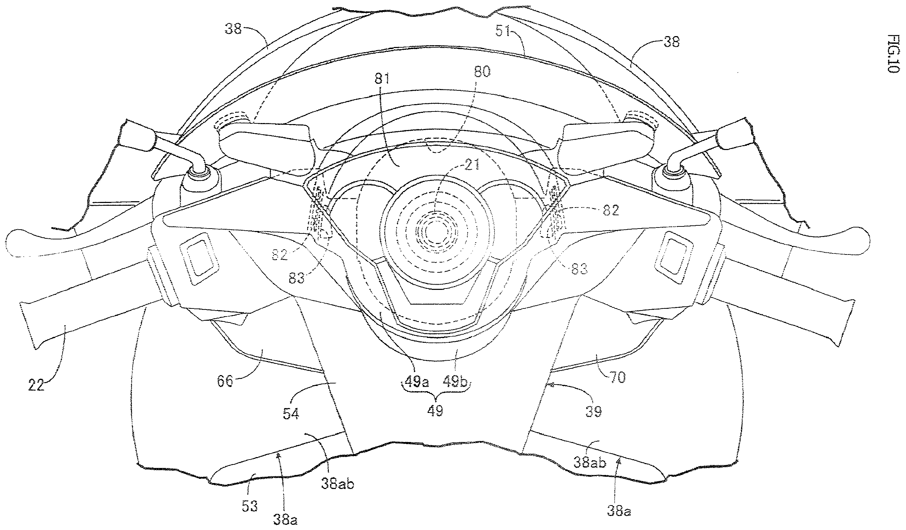

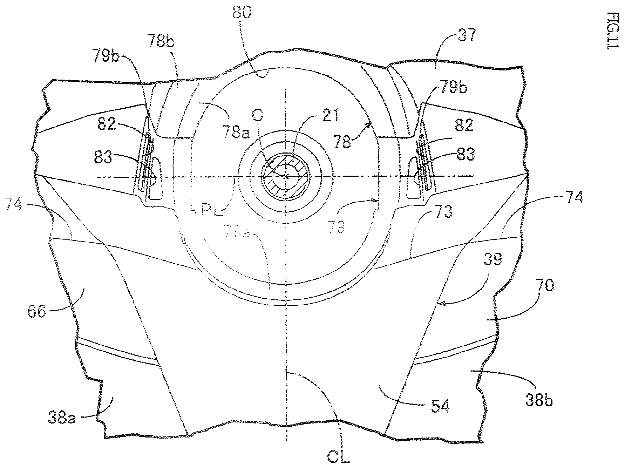

Referring now to FIGS. 10 and 11, upper opposing walls 78 and 79 are formed at an upper portion of the front cover 37 and an upper portion of the cover member 54 of the leg shield 39, respectively. The upper opposing walls 78 and 79 face a lower portion of a laterally middle portion of the handlebar cover 49. The upper opposing walls 78 and 79 cooperatively form an insertion hole 80 which extends vertically and through which the steering shaft 21 passes.

The handlebar cover 49 is formed such that it has a cover main portion 49a and a neck portion 49b. The cover main portion 49a has a meter unit 81 disposed at an upper portion of a laterally middle portion. The neck portion 49b connects to a lower portion of a laterally middle portion of the cover main portion 49a and extends downwardly. The upper opposing walls 78 and 79 are configured from flat plate portions 78a and 79a and side wall portions 78b and 79b. The flat plate portions 78a and 79a face upwardly in a neighbouring and opposing relationship to a lower end portion of the neck portion 49b. The side wall portions 78b and 79b face lower side walls of the neck portion 49b from the sides.

The flat plate portions 78a and 79a are formed in an arcuate shape such that they cooperate with each other to form the insertion hole 80. The side wall portions 78b of the upper opposing wall 78 on the front cover 37 side are formed such that they extend upwardly from an outer peripheral edge of the flat plate portion 78a in an opposing relationship to side walls of a lower portion on the front half side of the neck portion 49b. The upper opposing wall 79 on the leg shield 39 side has a pair of left and right side wall portions 79b, which are formed so as to extend upwardly from a front portion of an outer peripheral edge of the flat plate portion 79a in an opposing relationship to the opposite side walls in the lateral direction of the neck portion 49b.

Running wind enters the front cover 37 from the front when the motorcycle runs. Discharge holes 82 and 83 for rectifying and discharging the running wind rearwardly are provided at least on one of the upper opposing wall 78 of the front cover 37 and the upper opposing wall 79 of the cover member 54 of the leg shield 39, in such a manner that they are disposed at a position at which they face a lower portion of a laterally middle portion of the handlebar cover 49 from the sides. In the present embodiment, the discharge holes 82 and 83 are provided in the upper opposing wall 79 of the cover member 54 of the leg shield 39.

The discharge holes 82 and 83 are provided in the side wall portions 79b on opposite lateral sides of the upper opposing wall 79 of the leg shield 39 in an opposing relationship to the neck portion 49b at a lower portion of a laterally middle portion of the handlebar cover 49. A plurality of (in the present embodiment, two) vertically separated discharge holes 82 and 83 are provided in each of the side wall portions 79b.

The paired discharge holes 82 and 83 on each of left and right are disposed at a position which a plane PL passes. The plane PL passes an axial line of the steering shaft 21 and extends in the lateral direction of the vehicle in a crossing relationship with a lateral centreline CL of the motorcycle.

The side wall portions 79b are formed in an inclined relationship such that they are spread laterally outwardly toward the rear. The discharge holes 82 and 83 provided in the side wall portions 78b are formed so as to be directed obliquely rearwardly toward the lateral centre of the vehicle body.

Further, the discharge holes 82 and 83 are disposed at a position at which they overlap with the handlebar cover 49 as viewed from above (as shown in FIG. 10) in a direction along the axial line of the steering shaft 21.

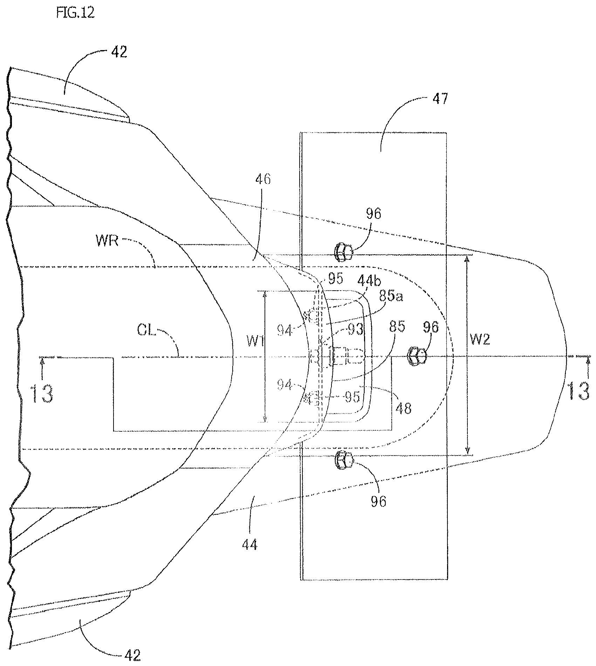

Referring also to FIG. 12, a grab rail 84 is supported on the pair of left and right rear frames 19 and is disposed so as to extend upwardly from a rear portion of the rear cover 42. The tail lamp 46 is disposed below the grab rail 84 and provided at a rear portion of the rear cover 42.

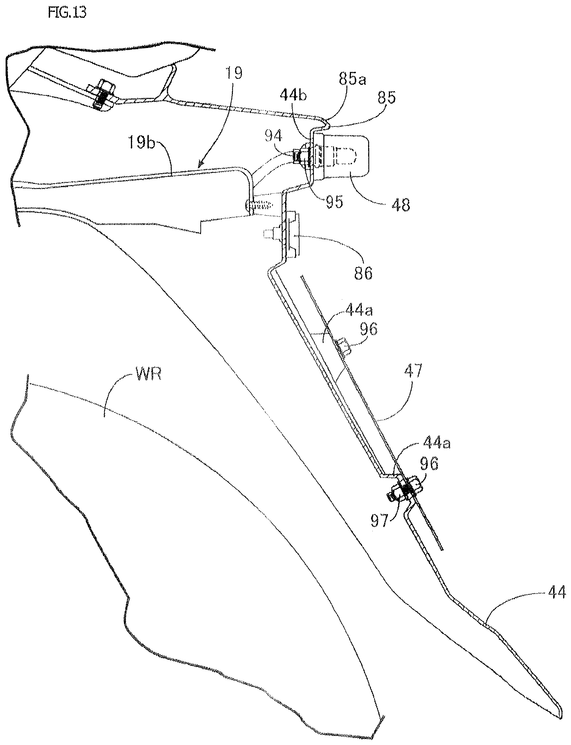

Referring also to FIG. 13, a plurality of (in this embodiment, three) boss portions 44a for fixing the license plate 47 are provided integrally on the rear fender 44 disposed below the tail lamp 46 so as to project rearwardly. The license plate 47 is fixed to the rear fender 44 by screwing and tightening a nut 97 on the inner face side of the rear fender 44 with and to each of three bolts 96 fitted in the license plate 47 and the boss portions 44a.

Further, the license plate lamp 48 is disposed at an upper position of the rear fender 44 and positioned on the lateral centreline CL such that it illuminates the license plate 47 from above. An attaching plate portion 44b for attaching the license plate lamp 48 thereto is provided integrally at an upper portion of the rear fender 44 such that it extends laterally. An attaching hole 93 is provided in the attaching plate portion 44b and disposed on the lateral centreline CL. The license plate lamp 48 is abutted with an outer face of the attaching plate portion 44b and partly projects into the rear fender 44 through the attaching hole 93. A pair of left and right bolts 94 are provided on the license plate lamp 48 and disposed on the opposite left and right sides of the attaching hole 93. The bolts 94 are inserted in the attaching plate portion 44b on the opposite sides of the attaching hole 93. The license plate lamp 48 is disposed at an upper portion of the rear fender 44 by screwing and tightening nuts 95 with and to the bolts 94 from the rear side of the rear fender 44.

A rear projection 85 is formed integrally at an upper portion of the rear fender 44 and projects rearwardly along an upper face of the license plate lamp 48.

The rear projection 85 is formed so as to be hollow, and an upper face 85a thereof is inclined rearwardly downwardly. Further, the rear projection 85 is formed such that it protrudes laterally outwardly farther than the attachment portion of the license plate lamp 48 to the rear fender 44. In other words, a width W2 of the rear projection 85 formed on the rear fender 44 at a laterally central location is set so as to be greater than a width W1 of the attaching portion of the license plate lamp 48, which is disposed on the rear fender 44 on the lateral centreline CL, to the rear fender 44.

Further, a reflective plate 86 is attached to the rear fender 44 such that it is disposed between the license plate lamp 48 and the license plate 47.

Now, operation of the present embodiment will be described. The second and third openings 60 and 64 are provided in the leg shield 39 which covers the head pipe 16 from the rear. Further, on the pair of front side covers 38 provided continuously to the opposite left and right sides of the leg shield 39 and covering the head pipe 16 from the opposite left and right sides, the extensions 38a which extend to the rear face of the leg shield 39 and surround at least part of the second and third openings 60 and 64 and overlap with the rear face of the leg shield 39 around the second and third openings 60 and 64 are provided integrally. Therefore, it is not necessary to provide many ribs on the leg shield 39, or to increase the thickness of the leg shield 39, and so the rigidity can be assured readily without complicating the structure and without leading to increase in weight. Besides, since the extensions 38a are provided integrally with the front side covers 38, a joint does not appear on the front side covers 38 and superior design properties can be assured.

Further, the accommodation case 61 is accommodated in the second opening 60 so as to project forwardly, and the flange portion 61b provided integrally at a rear portion of the accommodation case 61 and extending outwardly and sidewardly is attached to the leg shield 39 around the second opening 60, while the extension 38a is formed so as to surround the flange portion 61b from the outer side. Therefore, the rigidity of the leg shield 39 in the proximity of the second opening 60 can be raised further.

Further, the curved portion 73 which is curved forwardly as viewed in side elevation is formed at portions of the leg shield 39 and the front side covers 38 corresponding to the second and third openings 60 and 64, and the first and second lids 66 and 70 for openably closing the second and third openings 60 and 64 are attached to the leg shield 39. Therefore, the rigidity is increased by the curved shape, and besides, by closing the openings with the first and second lids 66 and 70, the rigidity in the proximity of the second and third openings 60 and 64 can be increased.

Further, the upper ridge line 75 which is disposed in a forwardly downwardly inclined state when viewed in side elevation in front of the second and third openings 60 and 64, and the lower ridge line 76 having the vertical ridge line portion 76a extending vertically in side elevation and the inclined ridge line portion 76b extending forwardly and upwardly in a bent state from the upper end of the vertical ridge line portion 76a toward the upper ridge line 75 and disposed below the second and third openings 60 and 64, are formed on the front side covers 38 so as to project sidewardly. Therefore, the front portion structure can contribute to an enhancement in rigidity of the front side covers 38.

Besides, the upper ridge line 75 extends forwardly farther than the location at which the upper ridge line 75 crosses with the extension 77 of the lower ridge line 76 which extends toward the upper ridge line 75 side when viewed in side elevation. Therefore, the upper ridge line 75 can be made long in the longitudinal direction to further raise the rigidity of the front side covers 8.

Meanwhile, the upper opposing walls 78 and 79 which face a lower portion of the handlebar cover 49, which covers the steering handlebar 23 which is contiguous to the vertically extending steering shaft 21 that is steerably supported on the head pipe 16, at a laterally middle location and cooperatively form the insertion hole 80 through which the steering shaft 21 passes are provided at an upper portion of the front cover 37 which covers the head pipe 16 from the front and an upper portion of the leg shield 39, respectively. Further, the discharge holes 82 and 83 for discharging running wind entering from the front into the front cover 37 to the outside therethrough are provided in at least one of the upper opposing wall 78 of the front cover 37 and the upper opposing wall 79 of the leg shield 39 (in the embodiment described above, in the upper opposing wall 79 of the leg shield 39), so as to be disposed at a position at which the opposing walls oppose from the sides to a lower portion of the handlebar cover 49 at a laterally middle location. Therefore, the discharge holes 82 and 83 are disposed at a position at which they are less likely to be seen from the outside, and the rectification effect by the discharge holes 82 and 83 can be enhanced while the discharge holes are made less conspicuous. Besides, since the discharge holes 82 and 83 can be disposed rather near to the lateral centre of the vehicle, a negative pressure which is likely to be generated behind the leg shield 39 can be cancelled efficiently.

Further, the discharge holes 82 and 83 which are provided on opposite sides of the upper opposing wall 79 of the leg shield 39 so as to face from the sides a lower portion of the handlebar cover 49 at a laterally middle location are formed so as to be directed obliquely downwardly toward the lateral centre of the vehicle body. Therefore, a negative pressure which is likely to be generated behind the leg shield 39 can be cancelled effectively.

Further, the plurality of (in the present embodiment, two) discharge holes 82 are 83 are provided on each of the left and right sides of the upper opposing wall 79 of the leg shield 39 and disposed separately from each other upwardly and downwardly. Therefore, degradation of the rigidity of the upper opposing wall 79 of the leg shield 39 by provision of the discharge holes 82 and 83 can be suppressed.

Further, the discharge holes 82 and 83 are disposed at a position at which the discharge holes 82 and 83 overlap with the handlebar cover 49 as viewed from above in a direction along an axial line of the steering shaft 21. Therefore, the discharge holes 82 and 83 can be made even less conspicuous.

Further, the tail lamp 46 is provided at a rear portion of the rear cover 42 disposed above the rear wheel WR and covering a rear portion of the vehicle body frame F from the sides. Further, the rear fender 44 disposed below the tail lamp 46 and having the license plate 47 attached thereto is provided continuously to the rear cover 42 in such a manner as to cover the rear wheel WR from the upper obliquely rear side. Further, the license plate lamp 48 which illuminates the license plate 47 from above is disposed at an upper portion of the rear fender 44. Further, the rear projection 85 is formed integrally at an upper portion of the rear fender 44 so as to project rearwardly along the upper face of the license plate lamp 48. Therefore, the attaching portion of the license plate lamp 48 to the rear fender 44 can be made less likely to be seen, to thereby enhance the design properties.

Further, since the rear projection 85 is hollow, the rear projection 85 can be formed thin and can be reduced in weight. Further, since the upper face 85a of the rear projection 85 is inclined rearwardly and downwardly, rainwater sticking to the rear projection 85 can be readily dropped rearwardly, and the attaching portion of the license plate lamp 48 to the rear fender 44 can be made further less likely to be seen to thereby enhance the design properties. Further, since the rear projection 85 is formed thin, also it is facilitated to form the inclined upper face 85a of the rear projection 85.

Further, the rear projection 85 is formed such that it protrudes laterally outwardly farther than the attaching portion of the license plate lamp 48 to the rear fender 44. Therefore, the attaching portion of the license plate lamp 48 to the rear fender 44 can be made even less likely to be seen, to thereby further improve the design properties. Besides, rainwater dropping from the upper face 85a of the rear projection 85 becomes less likely to be collected into a gap around the attaching portion of the license plate lamp 48 to the rear fender 44.

Furthermore, the reflective plate 86 is attached to the rear fender 44 between the license plate lamp 48 and the license plate 47. Therefore, by making the distance between the license plate lamp 48 and the license plate 47 comparatively great, diffused light becomes likely to be irradiated upon the license plate 47. Further, the reflective plate 86 can be attached to the rear fender 44 making effective use of the space between the license plate lamp 48 and the license plate 47.

While a presently preferred embodiment of the present invention has been described, the invention is not limited to the embodiment described above, but various design changes can be made without departing from the scope of the present invention defined in the claims.

## Claims

1. A front portion structure of a vehicle body cover for a motorcycle, comprising:
a leg shield (39) which covers, from the rear, a head pipe (16) provided at a front end portion of a vehicle body frame (F) in front of legs of an occupant seated on a riding seat (34); and
front side covers (38) provided continuously to opposite left and right sides of the leg shield (39) so as to cover the head pipe (16) from the left and right sides;
the leg shield (39) having openings (60, 64) provided therein;
wherein an accommodation case (61) is accommodated in one of the openings (60, 64) so as to project forwardly;
**characterised by**:
each of the front side covers (38) having an extension (38a) integrally provided thereon in such a manner as to extend to a rear face of the leg shield (39) and surround at least part of the openings (60, 64) and overlap with the rear face of the leg shield (39) around the openings (60, 64);
wherein a flange portion (61b) provided integrally at a rear portion of the accommodation case (61) and extending sidewardly outwards is attached to the leg shield (39) around the one opening (60) while the extension (38a) is formed so as to surround the flange portion (61b) from an outer side; and
wherein a curved portion (73) which curves forwardly when viewed in side elevation is formed at each of portions of the leg shield (39) and the front side covers (38) corresponding to the openings (60, 64), and lids (66, 70) for openably closing the openings (60, 64) are attached to the leg shield (39).

2. The front portion structure of a vehicle body cover for a motorcycle according to claim 1,
wherein an upper ridge line (75), disposed so as to be in a forwardly downwardly inclined state when viewed in side elevation in front of the openings (60, 64), and a lower ridge line (76), having a vertical ridge line portion (76a) extending vertically when viewed in side elevation and an inclined ridge line portion (76b) extending forwardly and upwardly in a bent state from an upper end of the vertical ridge line portion (76a) toward the upper ridge line (75) and disposed below the openings (60, 64), are formed on the front side covers (38) so as to project sidewardly.

3. The front portion structure of a vehicle body cover for a motorcycle according to claim 2,
wherein the upper ridge line (75) extends forwardly farther than a location at which the upper ridge line (75) crosses with an extension (77) of the lower ridge line (76) which extends toward the upper ridge line (75) when viewed in side elevation.

## Patentansprüche

1. Struktur des vorderen Abschnitts einer Fahrzeugkarosserieverkleidung für ein Motorrad, umfassend:
einen Beinschutz (39), der eine Hauptleitung (16), die an einem vorderen Endabschnitt eines Fahrzeugkarosserierahmens (F) vor Beinen eines auf einem Fahrersitz (34) sitzenden Nutzers bereitgestellt ist, von hinten abdeckt; und
vordere Seitenabdeckungen (38), die derart durchgehend an gegenüberliegenden linken und rechten Seiten des Beinschutzes (39) bereitgestellt sind, dass die Hauptleitung (16) von der linken und der rechten Seite abgedeckt wird;
wobei der Beinschutz (39) darin bereitgestellte Öffnungen (60, 64) aufweist;
wobei ein Aufnahmegehäuse (61) derart in einer der Öffnungen (60, 64) aufgenommen ist, dass es nach vorne vorragt;
**dadurch gekennzeichnet, dass**:
jede der vorderen Seitenabdeckungen (38) eine Verlängerung (38a) aufweist, die ganzheitlich auf solche Weise an denselben bereitgestellt ist, dass sie sich zu einer hinteren Fläche des Beinschutzes (39) erstreckt und zumindest einen Teil der Öffnungen (60, 64) umgibt und die hintere Fläche des Beinschutzes (39) um die Öffnungen (60, 64) herum überdeckt;
wobei ein Flanschabschnitt (61b), der ganzheitlich an einem hinteren Abschnitt des Aufnahmegehäuses (61) bereitgestellt ist und sich seitlich nach außen erstreckt, an dem Beinschutz (39) um die eine Öffnung (60) herum befestigt ist, während die Verlängerung (38a) derart gebildet ist, dass sie den Flanschabschnitt (61b) von einer Außenseite umgibt; und
wobei ein gekrümmter Abschnitt (73), der bei Betrachtung in einer Seitenansicht nach vorne gekrümmt ist, an jedem von Abschnitten des Beinschutzes (39) und der vorderen Seitenabdeckungen (38), die den Öffnungen (60, 64) entsprechen, gebildet ist, und Deckel (66, 70) zum öffnungsfähigen Schließen der Öffnungen (60, 64) an dem Beinschutz (39) befestigt sind.

2. Struktur des vorderen Abschnitts einer Fahrzeugkarosserieverkleidung für ein Motorrad nach Anspruch 1,
wobei eine obere Rippenlinie (75), die angeordnet ist, um bei Betrachtung in einer Seitenansicht vor den Öffnungen (60, 64) in einem nach vorne nach unten geneigten Zustand zu sein, und eine untere Rippenlinie (76), die einen vertikalen Rippenlinienabschnitt (76a) aufweist, der sich bei Betrachtung in einer Seitenansicht vertikal erstreckt, und ein geneigter Rippenlinienabschnitt (76a), der sich in einem gebogenen Zustand nach vorne und nach oben von einem oberen Ende des vertikalen Rippenlinienabschnitts (76a) zu der oberen Rippenlinie (75) hin erstreckt und unter den Öffnungen (60, 64) angeordnet ist, derart auf den vorderen Seitenabdeckungen (38) gebildet sind, dass sie seitlich vorragen.

3. Struktur des vorderen Abschnitts einer Fahrzeugkarosserieverkleidung für ein Motorrad nach Anspruch 2,
wobei sich die obere Rippenlinie (75) weiter nach vorne erstreckt als eine Stelle, an der die obere Rippenlinie (75) eine Verlängerung (77) der unteren Rippenlinie (76) kreuzt, die sich bei Betrachtung in einer Seitenansicht zu der oberen Rippenlinie (75) hin erstreckt.

## Revendications

1. Structure de partie avant d'un capot de carrosserie de véhicule pour une motocyclette, comprenant :
un protège-jambe (39) qui recouvre, depuis l'arrière, un tube de tête (16) disposé au niveau d'une partie d'extrémité avant d'un châssis de carrosserie de véhicule (F) devant les jambes d'un occupant assis sur un siège à enfourcher (34) ; et
des capots de côté avant (38) disposés de manière continue sur les côtés gauche et droit opposés du protège-jambe (39) de sorte à recouvrir le tube de tête (16) à partir des côtés gauche et droit ;
le protège-jambe (39) présentant des ouvertures (60, 64) ménagées dans celui-ci ;
dans laquelle un boîtier de réception (61) est logé dans l'une des ouvertures (60, 64) de sorte à faire saillie vers l'avant ;
**caractérisée par** :
chacun des capots de côté avant (38) présentant une extension (38a) disposée d'un seul tenant sur celui-ci de telle manière à s'étendre vers une face arrière du protège-jambe (39) et à entourer au moins une partie des ouvertures (60, 64) et à chevaucher la face arrière du protège-jambe (39) autour des ouvertures (60, 64) ;
dans laquelle une partie formant bride (61b) disposée d'un seul tenant au niveau d'une partie arrière du boîtier de réception (61) et s'étendant latéralement vers l'extérieur est fixée au protège-jambe (39) autour de l'ouverture (60) tandis que l'extension (38a) est formée de sorte à entourer la partie formant bride (61b) depuis un côté externe ; et
dans laquelle une partie arrondie (73) qui s'arrondit vers l'avant lorsqu'elle est vue en élévation latérale, est formée au niveau de chacune des parties du protège-jambe (39) et des capots de côté avant (38) correspondant aux ouvertures (60, 64) et des couvercles (66, 70) pour fermer de manière ouvrable les ouvertures (60, 64) sont fixés au protège-jambe (39).

2. Structure de partie avant d'un capot de carrosserie de véhicule pour une motocyclette selon la revendication 1,
dans laquelle une ligne de crête supérieure (75), disposée de sorte à être dans un état incliné vers le bas vers l'avant lorsqu'elle est vue en élévation latérale devant les ouvertures (60, 64) et une ligne de crête inférieure (76), présentant une partie de ligne de crête verticale (76a) s'étendant verticalement lorsqu'elle est vue en élévation latérale et une partie de ligne de crête inclinée (76b) s'étendant vers l'avant et vers le haut dans un état plié depuis une extrémité supérieure de la partie de ligne de crête verticale (76a) vers la ligne de crête supérieure (75) et disposée en dessous des ouvertures (60, 64) sont formées sur les capots de côté avant (38) de sorte à faire saillie latéralement.

3. Structure de partie avant d'un capot de carrosserie de véhicule pour une motocyclette selon la revendication 2,
dans laquelle la ligne de crête supérieure (75) s'étend vers l'avant plus loin qu'un emplacement au niveau duquel la ligne de crête supérieure (75) croise une extension (77) de la ligne de crête inférieure (76) qui s'étend vers la ligne de crête supérieure (75) lorsqu'elle est vue en élévation latérale.
